Europäisches Patentamt

European Patent Office

Office européen des brevets

(11) Publication number: **0 256 881**
**A2**

## (12) EUROPEAN PATENT APPLICATION

(21) Application number: 87307298.7

(22) Date of filing: 18.08.87

(51) Int. Cl.⁴: **G 06 F 15/40**
**G 06 F 9/44**

(30) Priority: 18.08.86 US 897472

(43) Date of publication of application:
24.02.88 Bulletin 88/08

(84) Designated Contracting States:
BE CH ES FR GB IT LI SE

(71) Applicant: **WESTINGHOUSE ELECTRIC CORPORATION**
**Westinghouse Building Gateway Center**
**Pittsburgh Pennsylvania 15222 (US)**

(72) Inventor: **Thompson, Robert William, Jr.**
**104 Briaridge Drive**
**Turtle Creek PA 15145 (US)**

(74) Representative: **van Berlyn, Ronald Gilbert**
**23, Centre Heights**
**London, NW3 6JG (GB)**

(54) An automated method for creating a configuration database.

(57) The present invention includes a compiler that translates a user provided database English-like description into a centralized database that is accessible by data acquisition software. The description is parsed by the compiler using a finite state table driven parser. The syntax table is converted into a syntax state or node table and a transition table. The transition table defines the recognizable tokens in each state. If a token matches a particular transition set, an action routine can be performed. When the end of the description is reached, the compiler combines the sections of the intermediate database into one continuous database suitable for loading into a data acquisition computer.

FIG. 1.

Bundesdruckerei Berlin

**Description**

# AN AUTOMATED METHOD FOR CREATING A CONFIGURATION DATABASE

## BACKGROUND OF THE INVENTION:

### Field of the Invention

The present invention relates to an automated database configuration method for creating configuration databases for computers performing data acquisition and monitoring and, more particularly, the present invention includes a database compiler which translates a block structured English-like description into the target database using a finite state table driven syntax parser to determine the meaning of the English-like description and to determine action routines which, based on the determined meaning, initialize a data structure, fill the data structure as well as perform functions necessary for creating the target database.

## DESCRIPTION OF THE RELATED ART

When digital computers are used in data acquisition and monitoring applications, sensors are either directly connected to dedicated input/output ports of the computer or to the input/output ports of an input/output interface when such is interposed between the computer and sensors. In such systems, the sensor values obtained during a sampling cycle have various operations performed thereon such as scaling and testing against set points. Software already existing in the computer must be properly configured to provide information such as the correspondence of sensors to input/output ports and storage areas, alarm set point calculations, actions to be taken when alarms occur, etc. The configuration information is typically hard-coded into the software requiring that a person skilled. in computer software be available to make changes and modifications in the software whenever configuration information changes. This dependence on highly trained people exacerbates the problem of maintaining non-standard software at many different sites which use substantially the same sensors and equipment. As a result, non-standard software requires separate system verification and debugging efforts for each of the different implementations by highly trained people.

## SUMMARY OF THE INVENTION

It is an object of the present invention to allow the use of standard software for different implementations of a similar architecture by providing a description of the specific implementation in a central database.

The present invention provides an English-language like syntax that is easily modified to accommodate changes in architecture and method of database description.

As described herein, the present invention allows an application engineer alone to configure new implementations and modify existing implementations of a configuration database using an English-like syntax upon which a written description of the configuration is based, at the same time eliminating the requirement for a skilled software engineer to implement changes in a configuration.

The present invention allows the use of standardized software that it is easy to maintain, and uses a compiler that translates or compiles a user-provided Engligh-like database description into a centralized configuration database that is accessible by the data acquisition software.

The invention in its broad form resides in a method of creating a contiguous configuration database from a given database description having an English-like syntax including syntax nodes, where each block represents de scription of a data acquisition sensor, comprising the steps of: (a) reading a token in the form of a section from said database description including said block; characterized by parsing said database description, and (b) executing a current syntax node associated with the token to complete an entry in the configuration database.

The description is defined by the user in a block structured English-like syntax. This syntax is defined by, and parsed through, the use of a syntax table. The syntax table is converted into a syntax state table and a transition table. The transition table defines the recognizable tokens in each state, identifies action routines that are performed when a token is identified while in a particular state and specifies the next state for the next read token. The action routines are specialized application dependent subroutines which can perform a desired function such as loading an alarm set point (the value of the current token) into a particular location in the centralized database. When the description is completely parsed, the system converts the intermediate database into the centralized contiguous configuration database that is accessible by the data acquisition software whenever configuration information is required.

## BRIEF DESCRIPTION OF THE DRAWINGS

A more detailed understanding of the invention may be had from the following description of a preferred embodiment, given by way of example and to be studied in conjunction with the accompanying drawings wherein:

Fig. 1 is a flowchart depicting the major phases of the procedure according to the present invention;

Fig. 2 provides flowchart details of the phase 1 procedure;

Fig. 3 illustrates the details of the phase 2 procedure;

Fig. 4, including 4A and 4B, is a flowchart of the details of a syntax routine called by phase 1 and phase 2;

Fig. 5 depicts the data structure of a compiled syntax table according to an embodiment of the present invention;

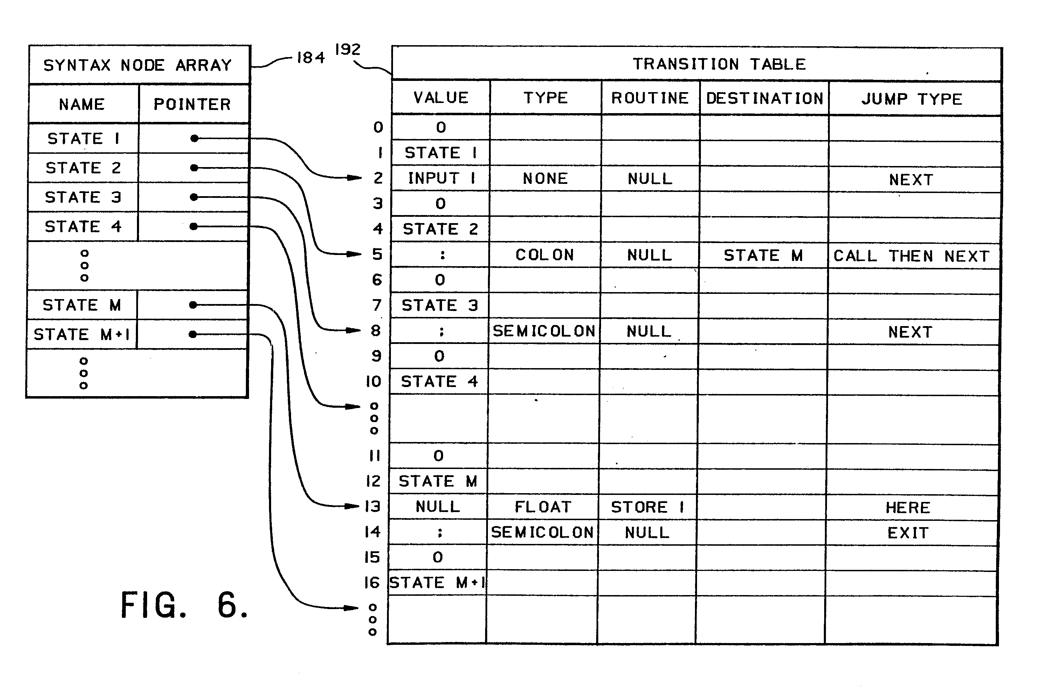

. Fig. 6 illustrates a simple example of a compiled syntax table in accordance with an embodiment of the present invention;

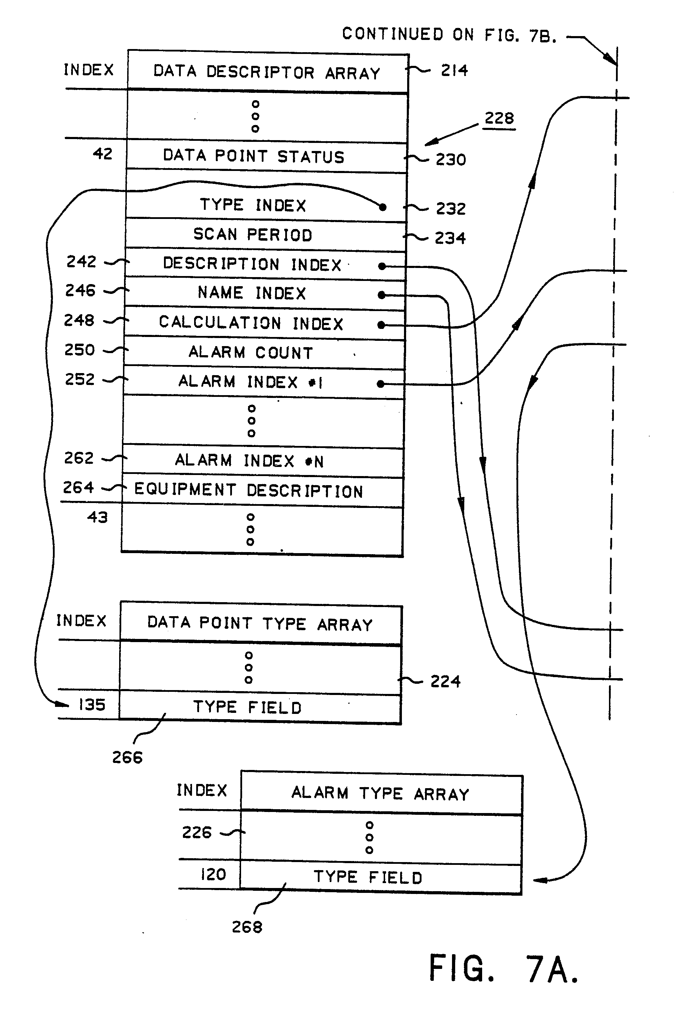

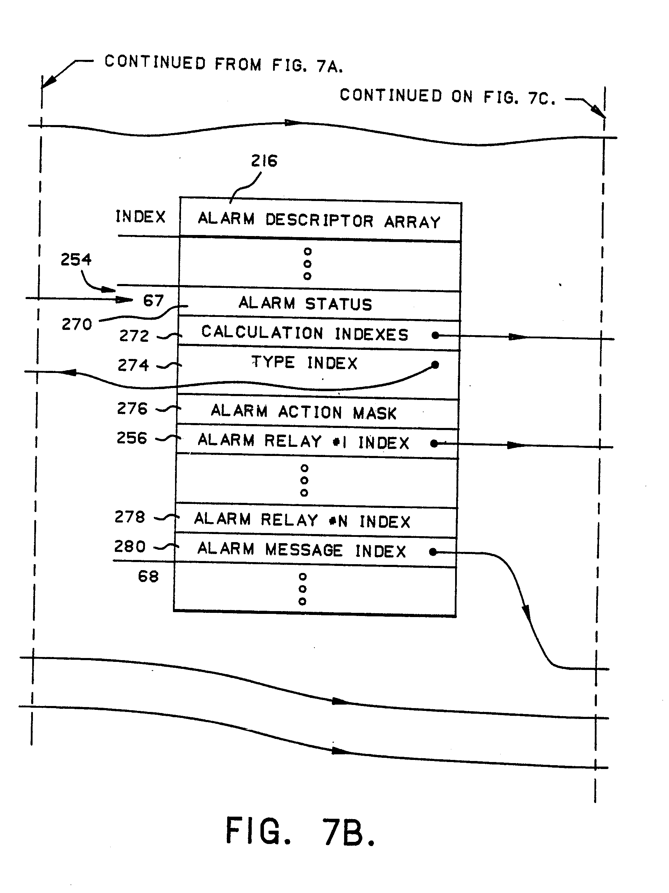

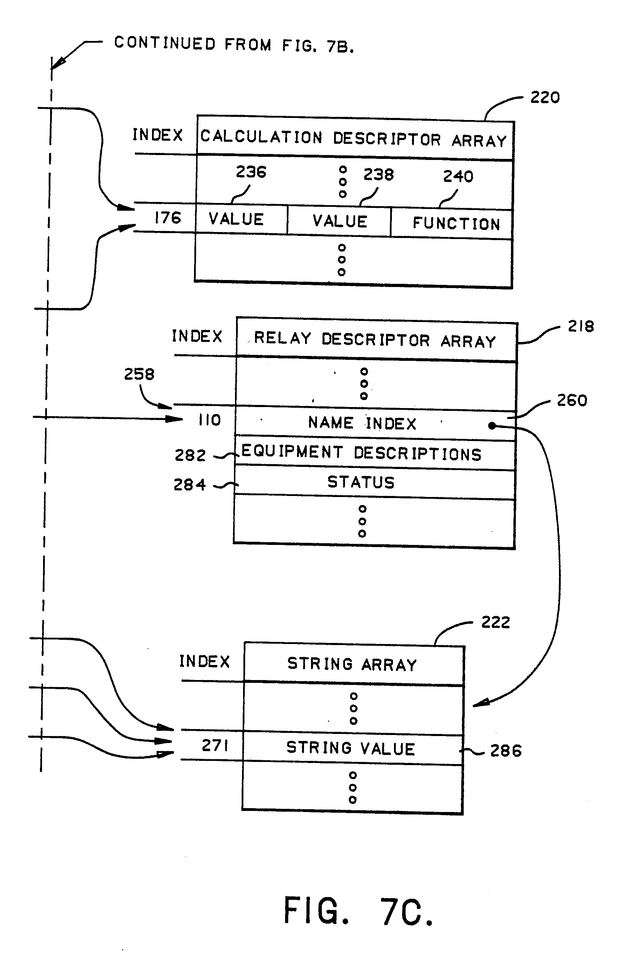

Fig. 7, including 7A-7C, provides an example of a database produced by an embodiment of the present invention;

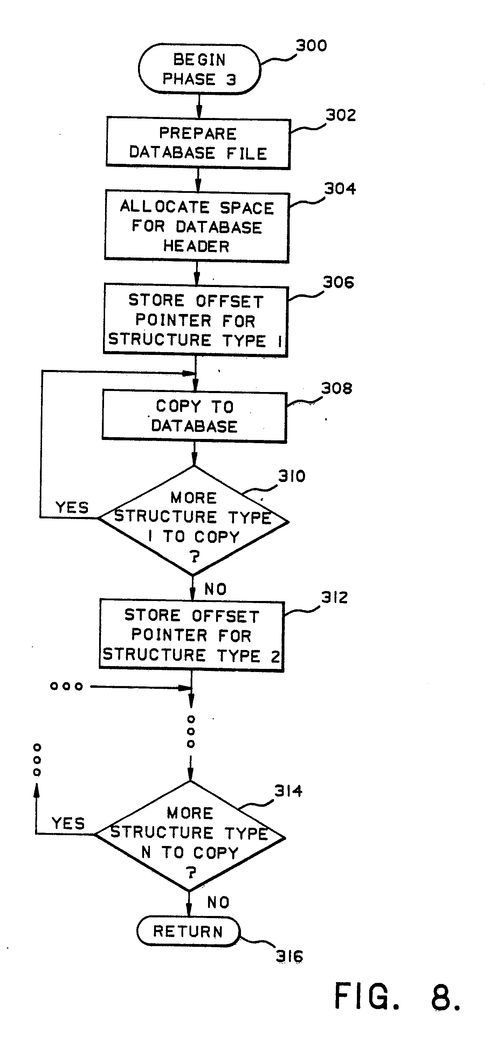

Fig. 8 illustrates the details of the phase 3 procedure;

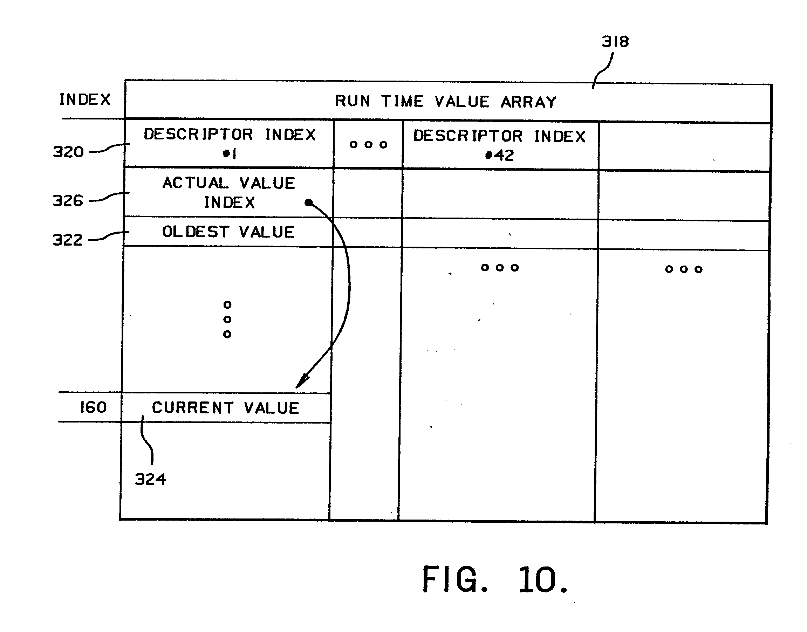

Fig. 9 illustrates the data structure of the database of Fig. 7 in final form; and

Fig. 10 illustrates the structure of a data point run time array used in conjunction with the database of Fig. 9.

## DESCRIPTION OF THE PREFERRED EMBODIMENTS

The present invention will be described with respect to the flowcharts and data structure diagram drawings attached hereto.

The present invention includes a syntax devised to allow creation of the configuration database mentioned above using a block structured English-like language description which is relevant to the architecture of the data acquisition system and the particular application, and a compiler which translates the description into the database defining the configuration using a syntax. The syntax allows a block structured English-like description where each block represents a particular discrete portion of the configuration such as the description of a sensor, an alarm definition for the sensor and the physical location of the sensor. An example of a typical description is set forth below:

Generator 1
Output Power maximum - 550 KW
Inputs Rack Number Maximum Value :
Input1 : 34.4 56.7;
Input2 : 18.5 63.7;
Alarms : Rack Number Set Point
Alarm1 10.5 10

Within each description block, certain other blocks may be nested, for example, a block defining an alarm for a sensor can be nested within a block defining a sensor even though this nesting is not shown in the above example. Certain blocks may not have nested blocks and may contain their information in the form of labels, specified by the syntax which indicate what is to be defined and have a value associated with the label. By using the typical descriptions of the equipment from the application engineers point of view, the syntax can be defined for each particular implementation. For example, the syntax for a generator configuration database implementation could be different from an implementation associate with a chemical plant. Thus, it is possible to define, using the syntax, which values can be legally specified in terms of data type and value range, or to allow the freedom of accepting any value.

The off-line compiler of the present invention is devised to read the English-like description from a file and produce the database using a finite state table driven parser which defines the syntax. The parser breaks down the input file into units known as tokens and traverses a number of syntax nodes where at each node only a certain class of tokens is acceptable to the syntax. Upon completion of the current node, control can be passed only to specified other nodes. If, at any node, there is not a match with the current token, the compiler will flag an error. If there is a match, the parser will execute the current node and then go to the specified successor node. The definition of these nodes and the tokens valid at each node is made in the syntax table. If a change in syntax is desired, modification of the syntax table will accomplish such.

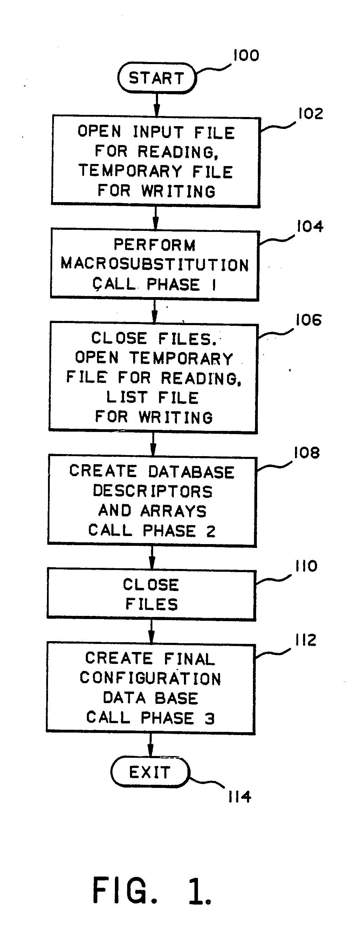

The configuration process, as illustrated in Fig. 1, begins with the opening 102 of an input file which includes the English-like database description and follows with the performance 104 of a phase 1 procedure. Phase 1 performs macro substitutions. When the output file for the macro substitution phase is completed, phase 2 is called 108. Phase 2 creates the internal or intermediate version of the database. Once the intermediate database is created, the final configuration database, suitable for installation into the target computer system is produced during phase 3.

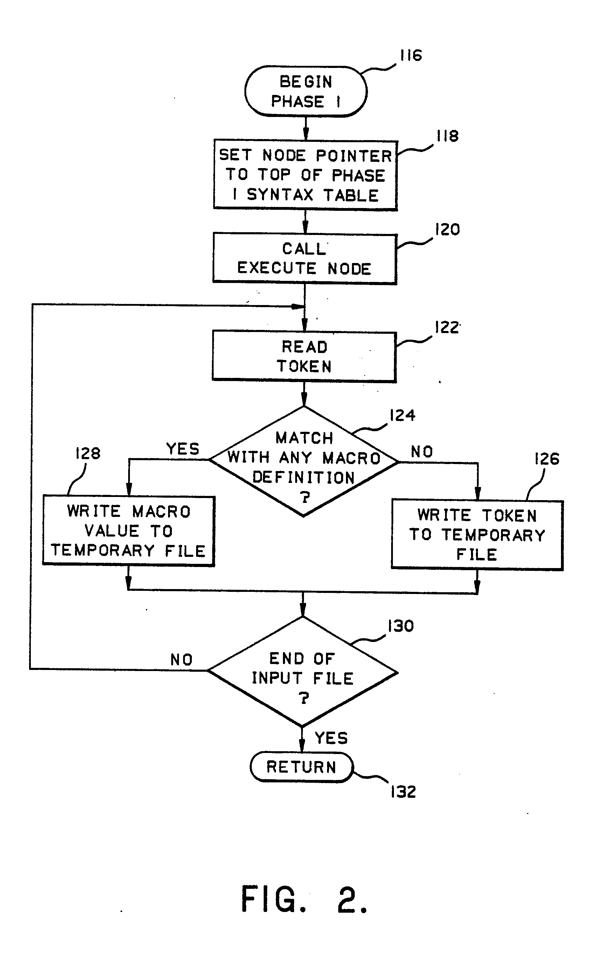

The present invention permits the use of macros that allow duplication of effort during creation of the English-like description to be eliminated. The first phase, as illustrated in more detail by Fig. 2, merely substitutes defined macros for the macro calls discovered in the input file. The calling 120 and execution of the "execute-node" routine will be discussed in more detail later as to its parsing capabilities, however, the execution of this routine in phase 1 parses the macro definitions at the beginning of the file into separate macros using a phase 1 syntax table that defines the macro definition syntax and stores the separate macros in a macro definition file. Once the end of the macro definitions is reached, the routine reads through the English-like description one token at a time and substitutes the macro definitions for the various macro calls discovered in the description.

Reading a token involves scanning the input file one character at a time until a token delimiter, such as a space or punctuation, is encountered, the group of characters separated by the delimiter is compared with tokens in various lists, each list containing tokens of a particular type. The result of these comparisons determines the type of the token just read. When a valid token is encountered, it, along with a token type, is stored in a temporary location for the later use by the parser and a token pointer is created to point the temporary location.

The macro substitution process starts by the reading 122 of a token and determining 124 whether the token matches any macro definition. If there is no match, the token is written to a temporary description file. If there is a match, then the macro from the temporary macro file, produced from the macro definitions, is written into the temporary description file. When the end of file is reached, the route returns to the main control routine of Fig. 1 resulting in a complete English-like description being stored in the temporary file.

Fig. 2 illustrates the major steps of phase 2. At the beginning of this phase and prior to beginning the parsing process for the completed English-like description stored in the temporary description file, the compiler preallocates a number of arrays of empty data structures, that is, sets aside memory areas for each type of description, alarm, relay, data point, etc. for the particular implementation. These structures have different forms depending upon the nature of the data associated with them and the particular database being implemented. In a general application, there would be structures for sensors, alarms, calculations, string data, I/O data and the like. Customization for a particular application may include the addition of different types of data structures and the present invention can accommodate such. One of ordinary skill in the art familiar with the target configuration database implementation can provide the procedure for the particular preallocation depending on the programming language used. The preallocated structures will be initialized and filled with appropriate data by the parsing process which is performed during phase 2. At the beginning of the parsing process, the node pointer is et 136 to the top node of the syntax table used for parsing the description and then the execute node routine is called 138.

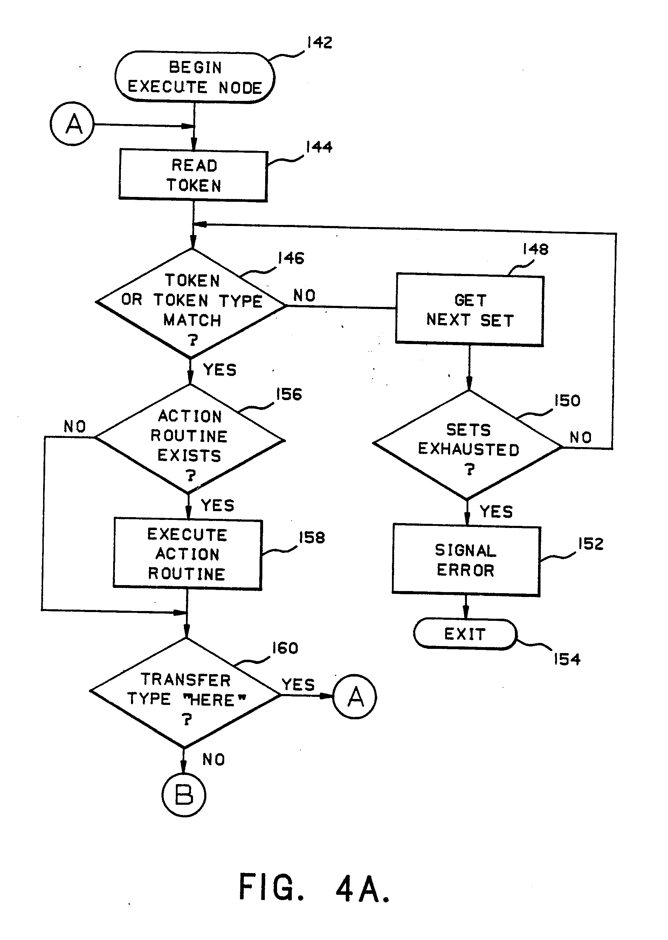

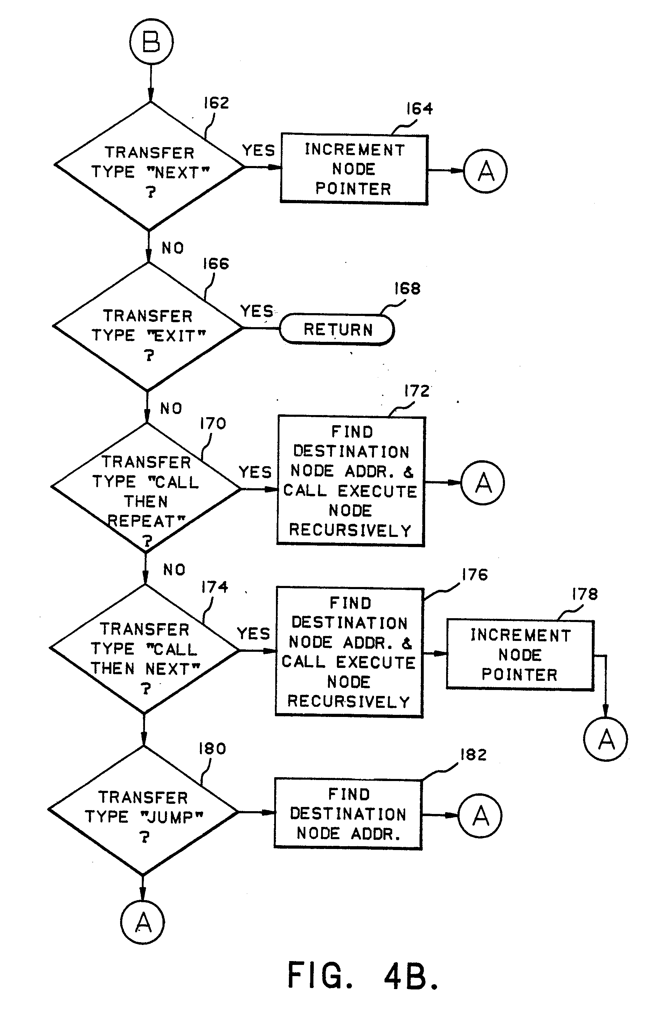

The parsing process, as illustrated in Fig. 4, is a recursive execution of a basic parsing loop. This loop, in general, reads a token, where a token (an actual value) and token type are returned from the read as previously discussed, executes the current syntax node, determines the next node and starts again, stopping when no more tokens are to be read, an error is detected or the end of the syntax table is reached. During this process, a pointer is maintained that points to the current syntax node. A token is the smallest unit in the syntax and is typically one word, a number or punctuation delimited by a white space or punctuation.

After a token is read 144, a determination is made 146 concerning whether the read token matches the token value or token type in the current transition set and if not, a new transition set is retrieved 148. If the transition sets for the current syntax node are exhausted 150 before the token is matched, an error is signalled 152 indicating that the current token is not valid in its present location in the description and parsing stops.

Whenever the token value or token type match for a particular transition set, the parser determines 156 whether an action routine exists for the matched transition set and executes 158 the associated action routine if it exists. The action routine can initialize a new data structure, fill a field of a previously initialized data structure with configuration information represented by the token or some other arbitrary function as desired.

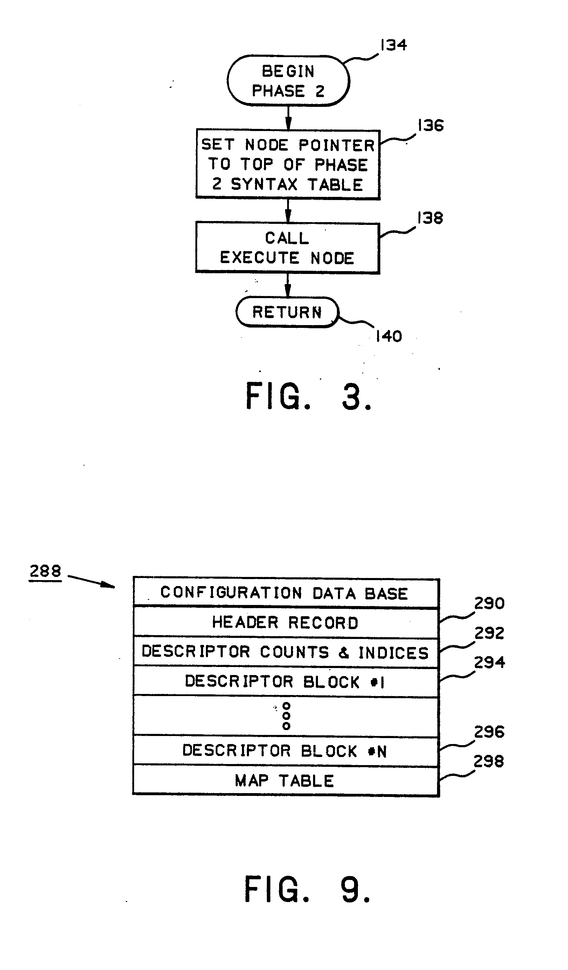

Once the action routine has been executed, the compiler determines the destination and type of transfer specified in the transition set. If the transfer is to the present syntax node 160, then a new token is read 144 and the token matching routine is executed again. If the transfer is to the next node 162, the syntax node pointer is incremented 164, a new token is read 144 and another attempt to match occurs. If it is an exit type transfer 168, the compiler returns to the phase 2 control routine of Fig. 3 or to the calling node if one of the transfer then return types discussed below is active. If the transfer is a return and repeat transfer 170, the parser proceeds 172 to the destination syntax node for the next read token and then returns to the present node once the destination syntax node has been traversed. If the transfer type is a return and next type transfer 174, the parser transfers control to the destination syntax node and when a return occurs, increments the node pointer 178. If the transfer is a simple jump type transfer 180, the destination node is loaded 182 into the syntax node pointer.

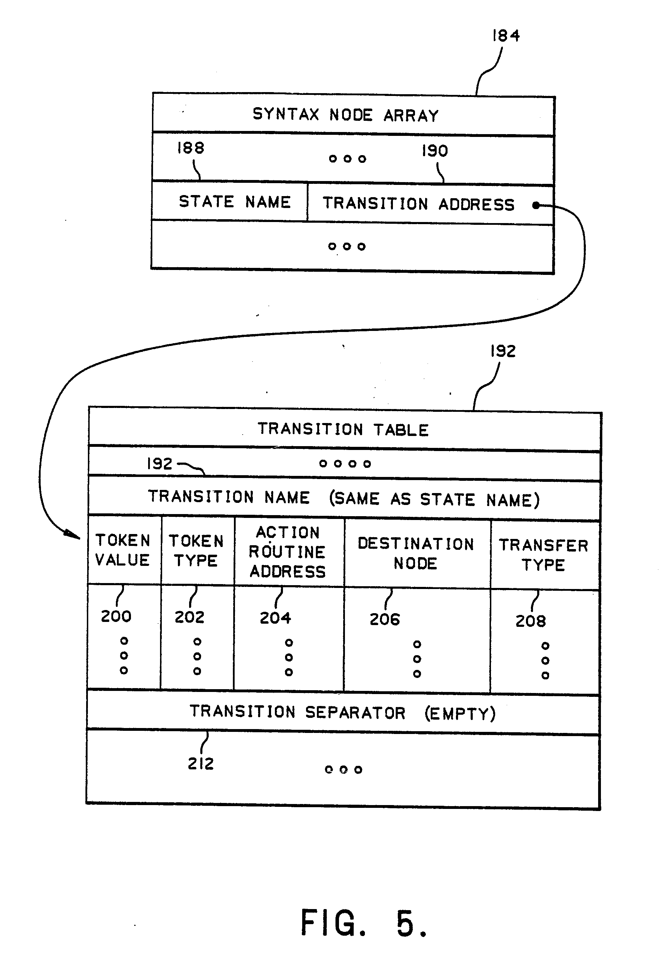

The compiled version of a syntax table, which the procedure of Fig. 4 uses to determine appropriate action routines, includes a syntax node array 184, as illustrated in Fig. 5. The array 184 has a state name or node name 188 and a transition address 190 which points to a group of transitions in a transition table 192. Each group of transitions is preceded by a transition name record which includes the transition name 196. Each transition set includes a token value 200 where the token values 200, in a group of transitions, are compared, as previously discussed, with respect to Fig. 4, to determine whether there is a match with the latest token read. The token type can be used concurrently with the token value 200, to perform a match or, as an alternative. The token value 200 is allowed to be null, meaning no token and the token type is allowed to be zero, meaning no type, however, one or the other must be specified. If a match occurs with a particular transition, the action routine address 204 is used to transfer program control to an action routine, that is, a subroutine call is performed. The action routine will perform the steps necessary to transfer the token and/or other data into appropriate locations in the internal database. The action routines for a particular implementation can be provided by one of ordinary skill in the art. The action routine field 204 can be null (meaning no routine). Once the action routine is executed, the destination node field 206 is used to determine the destination node within the syntax node array 184.

Associated with the destination can be an optional transfer type 208. The transfer type is one of the following as briefly previously discussed: Next - meaning go to the next node in the array 184, this transfer type does not require a destination node name; Here - meaning remain at the present node, this type does not require a destination node name; Jump - meaning to to the node specified in the destination node field; Call-Then-Next - meaning go to the node specified and return to the next node when an exit transfer type is encountered, this transfer requires a node name for the destination; the Call-Then-Repeat - meaning go to the node specified and return to the current node when an exit transfer type is encountered, this transfer also requires a node name for the destination; and Exit - meaning return to the calling node. The "call-then" type transfers accomplish the return by pushing the current node pointer onto a system stack and popping the pointer off the stack whenever an "exit" type transfer is encountered.

The last record in a transition group is a transition separation record which is empty.

The transition table 192 and syntax node array 184 are compiled from a syntax table which has two types of records, as illustrated below:

    1 State ("State1")
    2 "Input1", None, Null, Next
    3 State ("State2")
    4 ":", Colon, Null, StateM, Call Then Next
    5 State ("State3")
    6 ";", Semicolon, Null, Next
    7 State ("State4")
    M State ("StateM")
    M + 1 Null, Float Storel, Here
    M + 2 ";", Semicolon, Null, Exit
    M + 3 State ("State M + 1")

The first type is a node header which is illustrated as records 1, 3, 5, M and M + 3. The node header includes the state name and the node headers are loaded into the syntax node array 184, as illustrated in Fig. 5, and used to create a transition name record in the transition table 192 which receives the state name as the transition name 196. The second type of record is the transition definition record, as illustrated by records 2, 4, 6, M+1 and M+2. Each transition definition records is converted into a transition set or record in the transition table 192, as illustrated in Fig. 5.

The syntax table illustrated above will be compiled into the syntax node array 184 and transition table 192, illustrated in Fig. 6. The example of Fig. 6 will be used to illustrate how the parser of the present invention parses the fourth line of the English-like description previously illustrated. That is, an example of parsing "Inputl: 34.4 56.7;" will be presented. For this example, we will assume that the syntax node pointer is pointing at Statel, the first node in array 184 of Fig. 6.

At the start of parsing, the first token "Inputl" is read. The execution routine, using the state pointer (the transition group address) for Statel, will then scan the related transitions in the transition table 192, and in this case there is only one, and look for a match between the token and the token value or token type. The end of the transition group for a particular state is indicated when an empty record, such as transition set number 3, in Fig. 6 is encountered. A match occurs with transition set number 2 so the compiler will perform any action routine specified in the transition by making a subroutine type jump to the action routine specified. In this case, there is no action routine to be executed so the compiler will proceed to the destination indicated in the destination field, in this case, to the next node. As a result, the syntax node pointer is incremented to point to the syntax node for State2. The execution routine then loops through another iteration.

At the beginning of the second iteration, the second token ":" is read. Again, the related transition sets are scanned. Once again only one transition set exists and a match occurs with the single transition set in State2. This transition set also does not specify an action routine so the next node is determined from the destination field as "StateM" and this node is to be accessed by a "Call Then Next" type transfer. The compiler searches the syntax node array 184, looking for a state or node named "StateM" and when this syntax node is found, the associated pointer (address) for the first transition set (transition set number 11 in StateM) is returned. Because this is the type of transfer which requires a return, the return node pointer is saved on the system stack, that is, the node pointer pointing at State2 is saved on the stack.

The third token "34.4" is read and the transition sets in StateM are scanned. A match is found with transition set number 13, since the token value is null and the type specifies a floating point number. The action routine "Storel" is specified in the matched transition. The Storel action routine is called with "34.4" as the argument. This action routine stores the rack number in the appropriate location in the intermediate database for rack numbers associated with Inputl and generator 1. When the action routine is finished, the compiler examines the destination node field, which in this transition set specifies that the destination is the present node, requiring that the current syntax node be executed again.

The execution routine performs another iteration with the same node address ("StateM"). The fourth token "56.7" is read and the same procedure as discussed above, is executed with the action routine Storel storing the maximum value of the input in an appropriate location in the internal database.

Once again, the matched transition set specifies that the current syntax node is to be executed again. As a result, the fifth token ";" is read. In this situation, the transition sets of StateM are scanned and the second transition set number 14 results in a match. This transition set does not specify an action routine and specifies that the destination is an exit type destination. As a result, the compiler pops the last called node pointer, pointing to "State2", off the system stack and returns to State2. Since the jump type from State2 was "Call Then Next" the node pointer is incremented to point to "State3". The execution routine performs another iteration after reading the token ";" and continues traversing the transition table. As a result of the compilation of the small portion of the English-like description above, the appropriate locations of the internal database for rack number and maximum input value are properly filled.

As previously discussed, the compiler, before beginning the parsing process, preallocates memory space for internal data structures, for example, arrays, associated with the particular implementation. An example of an appropriate database for an electric power plant is illustrated in Fig. 7. This internal database would be changed or modified if, for example, the present invention were applied to a chemical plant. The internal database can include arrays such as a data descriptor array 214, an alarm descriptor array 216, a relay descriptor array 218, a calculator descriptor array 220, a string array 222 and various type arrays 224 and 226. In this example, the data descriptor array includes a data point 228 which has an index number "42". That is, this is the 42nd data point descriptor created by the compiler of the present invention which creates the data points as specified by the English-like description.

Other and different type arrays can be included in such an internal database as needed by a particular implementation. The action routines, as discussed previously, fill in the various fields within the arrays as in Fig. 7 as the English-like description is parsed, using a syntax table similar to that previously described. For example, when the compiler parses and recognizes that a data point type token has been identified, the source code action routine would find the next available field in the data point type array 224, illustrated to be index number 135 and store the index (135) in the type index field 232. If a description of the data point is recognized, this description would be stored in the string array 222 and the appropriate index stored in the description index field 234. In this particular configuration database implementation, calculations are done in reverse Polish notation as indicated by the value 236, value 238 and function 240 fields in the calculation descriptor array 220. An index, in the data descriptor array 214, for the calculation descriptor array 220 is included for data points which require calculations. As can be seen from Fig. 7, the internal database can include threads which run through several different arrays. For example, the alarm index 252, points to alarm descriptor 67 in the alarm descriptor array 216. This alarm includes an alarm relay index 256 which points to a relay descriptor 258 in the relay descriptor array 218. This particular relay descriptor has a name index 260 which points to a particular string value in the string array 222.

When an internal or intermediate database structure, as illustrated in Fig. 7 is completed, that is, when the compiler reaches the end of the English-like description, control is transferred to phase 3, as illustrated in Fig. 8. Phase 3 merely takes the internal database structure of Fig. 7 and creates a contiguous data structure, as illustrated in Fig. 9. That is, a header record 290 is created, along with descriptor counts and indices 292 which identify the location of the beginning of each of the descriptor blocks, as illustrated in Fig. 7. At the end of the contiguous configuration database record is a map table 296. This map table, although not shown in the illustration of the internal database of Fig. 7, is a table which relates symbolic names to the location of particular items in the database, that is, for example, the map table may include as the symbolic name for the maximum value of the first input of generator 1 "MG1I1". Associated with this symbolic name would be an address or index into the configuration database for the location at which the maximum value for input number 1 of generator 1 is located. The map table can be used by the data acquisition source code, which interfaces with the database, to quickly map into the database to obtain desired values. The map table symbolic names would be created by the action routines as the internal database structure is filled.

The phase 3 routine of Fig. 8 is concerned with transforming the compilers internal database representation (the intermediate file) into a form suitable as a configuration database. The present invention produces a continuous section file with a header record that identifies the file. In operating systems, such as DEC VMS, the section file is mapped directly to a section of accessible memory. The header 290 contains information about the number of each type of data structure, as well as the byte offset from the beginning of the header to the data structure. The compiler begins by preparing or opening a database file 302 and then allocates 304 space for the database header. Then the offsets for the various structures are calculated and stored 306 in the header record 290 followed by copying 308 the particular structure into the configuration database 288. If there is additional field data or data structure to copy into the database, the looping associated with copying continues. Each time a new descriptor array is copied into the configuration database 288, an offset pointer is stored in the header record. Because the various internal arrays created by the compiler are dynamic, that is, they only become as large as necessary to store the tokens for the English-like description, the configuration database is as compact as possible since the empty portions of the internal data structure are not copied into the configuration database. When phase 3 is complete, the temporary files, internal data structure and configuration database file are closed, the compiler then exits, as illustrated in Fig. 1.

A useful method of correlating actual data point values, that is, sensor samples, with the database of Fig. 9 is a run time value array 318, as illustrated in Fig. 10. This array divides the actual values into columns according to the descriptor index into the database of Fig. 9. That is, the descriptor index 320 corresponds to the index for the same data point in the data descriptor array 214 of Fig. 7 which is transformed into Fig. 9. Each descriptor column includes a series of actual sensor values from the oldest value 322 to the newest value 324. Each column also includes an index identifier which identifies the entry in the column which corresponds to the current value. The use of a run time structure as illustrated in Fig. 10, where actual values are directly correlated with database descriptors, allows the source code which accesses the database to easily index into the database to find needed information for a particular data point.

The creation of the syntax table and the associated action routines begins by talking to the application or field engineer who knows what kind of information is needed to define the various data points, alarms, etc. in a target system. Once all the types of information are known, a generalized block structured description is defined by placing the information in a form convenient for or easy to use by the application engineers. When the block structure is finished, a configuration database structure for the block structure can be created. When the block structure and configuration database structure are known, that is, when all the nested information is defined and how it relates to the configuration database are known, the syntax table can be created to parse the description using actual terms convenient to the application engineer. During creation of the syntax table, action routines that need to be created later can be identified and named. Once the syntax table is finished, the action routines that are called whenever a token is identified can be created to place the token in the appropriate location in the intermediate database. Then a routine which converts the intermediate database into the contiguous configuration database is produced.

The many features and advantages of the invention are apparent from the detailed specification and thus, it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and, accordingly, all suitable modifications and equivalents may be resorted to, falling within the scope of the invention. Such modifications can include the use of the present invention in various data acquisition and/or monitoring applications, the generation of input/output hardware dependent information such as scan lists, symbol table generation that would allow software to refer to sensors by the same symbolic names as given in the syntax, the use of alternate notations for a calculation, different implementations of the macro expansion process such as a single pass compiler, the use of a different computer language for compiler implementation and the use of languages other than English for the description. In addition, the present invention could be adapted to perform software configuration in an interactive manner.

**Claims**

1. A method of creating a contiguous configuration database from a given database description having an English-like syntax including syntax nodes, where each block represents description of a data acquisition sensor, comprising the steps of:

(a) reading (144) a token in the form of a section from said database description including said block; characterized by parsing said database description, and

(b) executing (146-182) a current syntax node associated with the token to complete an entry in the configuration database.

2. A method as recited in claim 1, wherein step (b) comprises the steps of:

(bi) comparing (146) token values (200) in transition sets (200-208) associated with the current syntax node (188) until a match to the token occurs;

(bii) executing (150) an action routine designated (204) in the matched transition set (200-208), the action routine making an entry into the database for the matched token; and

(biii) transferring (160-182) to a destination syntax node (206).

3. A method as recited in claim 2, wherein step (biii) includes the steps of:

(1) executing (144-158) the destination syntax node (206) for the next read token; and

(2) performing a transfer, (160-182) the transfer including returning (170) to the current syntax node and executing the current syntax node, returning (174) to a syntax node immediately following the current syntax node or transferring (180) to a different syntax node.

4. A method as recited in claim 1 wherein the step of parsing comprises parsing the language-type description using a syntax table by comparing tokens to token values in transition sets until a match occurs and executing action routines identified by the syntax table (184, 192) for matched tokens, the action routines filling the intermediate database structures; and

combining (302-316) the intermediate database structures into the contiguous configuration database (288) by concatenating the intermediate database structures and creating a header record (290) identifying the relative location of each structure within the configuration database.

5. A contiguous configuration database and a syntax table data structure combination, for parsing a language-type description characterized by

a syntax node array (184) including syntax nodes each having a name (188) and a transition address (190) for a group of transition sets (196-210) associated with each node; and

a transition table (192) including groups of transition sets, each transition set including a token value field (200) and a token type field (202) used to identify tokens in the language-type description, an action routine designation field (204) designating an action routine which fills the configuration database with the tokens, a destination node field (206) indicating the next syntax node to be executed and a transfer type field (208) identifying the type transfer that occurs between a current syntax node and a destination node.

0256881

FIG. 1.

0256881

FIG. 2.

0256881

FIG. 3.

FIG. 9.

0256881

FIG. 4A.

0256881

FIG. 4B.

0256881

FIG. 5.

0256881

| SYNTAX NODE ARRAY | | | | TRANSITION TABLE | | | | |
|---|---|---|---|---|---|---|---|---|
| NAME | POINTER | | | VALUE | TYPE | ROUTINE | DESTINATION | JUMP TYPE |
| STATE 1 | ● | 0 | | 0 | | | | |
| STATE 2 | ● | 1 | | STATE 1 | | | | |
| STATE 3 | ● | 2 | | INPUT 1 | NONE | NULL | | NEXT |
| STATE 4 | ● | 3 | | 0 | | | | |
| ○○○ | | 4 | | STATE 2 | | | | |
| | | 5 | | : | COLON | NULL | STATE M | CALL THEN NEXT |
| | | 6 | | 0 | | | | |
| STATE M | ● | 7 | | STATE 3 | | | | |
| STATE M+1 | ● | 8 | | : | SEMICOLON | NULL | | NEXT |
| ○○○ | | 9 | | 0 | | | | |
| | | 10 | | STATE 4 | | | | |
| | | ○○○ | | | | | | |
| | | 11 | | 0 | | | | |
| | | 12 | | STATE M | | | | |
| | | 13 | | NULL | FLOAT | STORE 1 | | HERE |
| | | 14 | | : | SEMICOLON | NULL | | EXIT |
| | | 15 | | 0 | | | | |
| | | 16 | | STATE M+1 | | | | |
| | | ○○○ | | | | | | |

184  192

FIG. 6.

0256881

| INDEX | DATA DESCRIPTOR ARRAY | ~ 214 |
|---|---|---|
| | o o o | |
| 42 | DATA POINT STATUS | ~ 230 |
| | TYPE INDEX | ~ 232 |
| | SCAN PERIOD | ~ 234 |
| 242 ~ | DESCRIPTION INDEX | |
| 246 ~ | NAME INDEX | |
| 248 ~ | CALCULATION INDEX | |
| 250 ~ | ALARM COUNT | |
| 252 ~ | ALARM INDEX #1 | |
| | o o o | |
| 262 ~ | ALARM INDEX #N | |
| 264 ~ | EQUIPMENT DESCRIPTION | |
| 43 | o o o | |

228

| INDEX | DATA POINT TYPE ARRAY | |
|---|---|---|
| | o o o | ~ 224 |
| 135 | TYPE FIELD | |

266

| INDEX | ALARM TYPE ARRAY |
|---|---|
| 226 ~ | o o o |
| 120 | TYPE FIELD |

268

FIG. 7A.

0256881

CONTINUED FROM FIG. 7A.

CONTINUED ON FIG. 7C.

216

| INDEX | ALARM DESCRIPTOR ARRAY |
|---|---|
| | ○ ○ ○ |
| 67 | ALARM STATUS |
| 272 | CALCULATION INDEXES ● |
| 274 | TYPE INDEX ● |
| 276 | ALARM ACTION MASK |
| 256 | ALARM RELAY #1 INDEX ● |
| | ○ ○ ○ |
| 278 | ALARM RELAY #N INDEX |
| 280 | ALARM MESSAGE INDEX ● |
| 68 | ○ ○ ○ |

254
270

FIG. 7B.

0256881

CONTINUED FROM FIG. 7B.

INDEX | CALCULATION DESCRIPTOR ARRAY | | 220
--- | --- | --- | ---
| 236 | 238 | 240
176 | VALUE | VALUE | FUNCTION

INDEX | RELAY DESCRIPTOR ARRAY | 218
--- | --- | ---
258 | |
110 | NAME INDEX | 260
282 | EQUIPMENT DESCRIPTIONS |
284 | STATUS |

INDEX | STRING ARRAY | 222
--- | --- | ---
| |
271 | STRING VALUE | 286

FIG. 7C.

0256881

FIG. 8.

0256881

| INDEX | RUN TIME VALUE ARRAY | | | |
|---|---|---|---|---|
| 320 | DESCRIPTOR INDEX #1 | o o o | DESCRIPTOR INDEX #42 | |
| 326 | ACTUAL VALUE INDEX | | | |
| 322 | OLDEST VALUE | | | |
| | o o o | | o o o | o o o |
| 160 | CURRENT VALUE | | | |

318

324

FIG. 10.